(19) **Europäisches Patentamt / European Patent Office / Office européen des brevets**

(11) **EP 4 629 183 A1**

(12) **EUROPEAN PATENT APPLICATION**
published in accordance with Art. 153(4) EPC

(43) Date of publication:
08.10.2025 Bulletin 2025/41

(21) Application number: 22969779.2

(22) Date of filing: 30.12.2022

(51) International Patent Classification (IPC):
*G06V 10/22* (2022.01)

(52) Cooperative Patent Classification (CPC):
G06V 10/22

(86) International application number:
PCT/CN2022/143924

(87) International publication number:
WO 2024/138636 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• BGI Shenzhen
  Shenzhen, Guangdong 518083 (CN)
• BGI Shenzhen Co., Ltd
  Shenzhen, Guangdong 518083 (CN)

(72) Inventors:
• LI, Min
  Shenzhen, Guangdong 518083 (CN)
• LI, Mei
  Shenzhen, Guangdong 518083 (CN)
• LI, Yuxiang
  Shenzhen, Guangdong 518083 (CN)

(74) Representative: Ashton, Gareth Mark et al
Baron Warren Redfern LLP
1000 Great West Road
Brentford TW8 9DW (GB)

(54) **CELL IMAGE REGISTRATION METHOD AND SYSTEM, ELECTRONIC DEVICE, AND STORAGE MEDIUM**

(57) The present disclosure provides a cell image registration method and system, an electronic device, and a storage medium. The cell image registration method comprises: acquiring cell contours in a cellular image and in a spatial transcriptomic data graph; respectively determining specific target cells on the basis of the definition of the cell contours; extracting geometric centers of the specific target cells, to respectively form a two-dimensional point cloud set of the cellular image and a two-dimensional point cloud set of the spatial transcriptomic data graph; then obtaining registration parameters; and registering the cellular image and the spatial transcriptomic data graph according to the registration parameters. According to the present disclosure, cell contours in the cellular image and in the spatial transcriptomic data graph as well as the definition of the cell contours are acquired, then two-dimensional point cloud sets are formed on the basis of the geometric centers of specific target cells, the two-dimensional point cloud sets are processed on the basis of a point cloud registration algorithm, and finally, registration parameters are acquired to register the cellular image and the spatial transcriptomic data graph, thereby overcoming the defect of being unable to perform in-situ analysis, and improving the accuracy of spatial transcriptomic sequencing techniques in spatiotemporal omics technology.

| Step | Description |
|------|-------------|
| S1 | acquire cell contours from both a cell image and a spatial transcriptomic data graph |
| S2 | determine specific target cells based on the clarity of the respective cell contours |
| S3 | extract geometric centers of the specific target cells, to respectively form a two-dimensional point cloud set corresponding to the cell image and a two-dimensional point cloud set corresponding to the spatial transcriptomic data graph |
| S4 | process the two-dimensional point cloud set of both the cell image and the spatial transcriptomic data graph based on a point cloud registration algorithm to obtain registration parameters |
| S5 | register the cell image and the spatial transcriptomic data graph according to the registration parameters |

Fig. 1

**EP 4 629 183 A1**

## Description

## TECHNICAL FIELD

The present disclosure relates to the field of cell analysis, and in particular, to a cell image registration method and system, an electronic device, and a storage medium.

## BACKGROUND

In the Spatial Enhanced Resolution Omics-sequencing (Stereo-seq) spatial transcriptomics technology, cell images are captured by optical instruments or other devices. A spatial transcriptomic data image differs greatly from a cell image. Firstly, single-stranded DNA (ssDNA) in a cell is amplified by Rolling Circle Amplification (RCA) to generate DNA nano balls (DNBs). Then, a DNB sequence is obtained through DNB sequencing technology, and a Coordinate ID (CID) technology is used to plot a DNB signal at a corresponding spatial position to form a spatial transcriptomic data image. Therefore, the spatial transcriptomic data image is a discrete image. Before analysis, the cell image has to be registered with the spatial transcriptomic data image for in-situ analysis. However, it is more difficult to acquire position information of cell tissue contours from the spatial transcriptomic data image, as compared with the cell image. In most of the conventional registration techniques, feature similarity matching is performed based on features of the cell image, so as to obtain a position mapping relationship between the spatial transcriptomic data image and the cell image. However, the distribution of pixel values of the spatial transcriptomic data image is discrete, and there is no effective method to register the cell image and the spatial transcriptomic data image, and perform an accurate in-situ analysis of the cell image and the spatial transcriptomic data image.

## SUMMARY

The technical problem to be solved by the present disclosure is to overcome the defect of being unable to perform an accurate in-situ analysis of a cell digital image and a spatial transcriptomic data image in the existing technology, and to provide a cell image registration method and system, an electronic device, and a storage medium.

The above technical problem is solved in the present disclosure through the following technical schemes.

A cell image registration method is provided, which includes:

- acquiring cell contours from both a cell image and a spatial transcriptomic data image, where the cell image and the spatial transcriptomic data image have a correspondence relationship;

- determining a plurality of specific target cells based on the clarity of the respective cell contours;

- extracting geometric centers of the plurality of specific target cells, to respectively form a two-dimensional point cloud set corresponding to the cell image and a two-dimensional point cloud set corresponding to the spatial transcriptomic data image;

- processing the two-dimensional point cloud set of both the cell image the spatial transcriptomic data image based on a point cloud registration algorithm to obtain registration parameters; and

- registering the cell image and the spatial transcriptomic data image according to the registration parameter.

Preferably, processing the two-dimensional point cloud set of both the cell image the spatial transcriptomic data image based on a point cloud registration algorithm to obtain registration parameters includes:

- acquiring an initial rotation parameter value and an initial translation parameter value;

- performing a transformation processing on the two-dimensional point cloud set of the cell image based on the initial rotation parameter value and the initial translation parameter value;

- acquiring a plurality of corresponding points in the two-dimensional point cloud set of the cell image and the two-dimensional point cloud set of the spatial transcriptomic data image;

- updating the rotation parameter and the translation parameter using an objective function configured to process the acquired corresponding points;

- determining whether a preset condition is met; if yes, acquiring the rotation parameter and the translation parameter as a final rotation parameter value and a final translation parameter value, which serve as registration parameters;

- if no, updating the rotation parameter and the translation parameter to be the initial rotation parameter value and the initial translation parameter value, and returning the step of transforming the two-dimensional point cloud set of the cell image based on the initial rotation parameter value and the initial translation parameter value.

Preferably, determining specific target cells based on the clarity of the respective cell contours includes:

- acquiring a first score of the cell contours in the cell image and a second score of the cell contours in the spatial transcriptomic data image, where both the first score and the second score are positively correlated with the clarity; and
- determining the specific target cells based on the first score and the second score.

The first score is calculated based on at least one of the following derived from the cell image, the eccentricity, the pixel gray value within the cell, and the pixel area of the cell.

The second score is calculated based on at least one of the following derived from the spatial transcriptomic data image, the amount of RNA and a pixel area of the cell.

Preferably, the specific target cells are a preset proportion of cells or a preset number of cells selected from the cell image according to the first score.

A preset proportion of cells or a preset number of cells are selected from the spatial transcriptomic data image according to the second score.

Preferably, the first score is determined based on the following formula:

$$S_{first-scor} = a/S_\mathrm{x} + b * S_\mathrm{y} + c * S_\mathrm{z},$$

where $S_\mathrm{x}$ represents the eccentricity of the cells in the cell image, $S_\mathrm{y}$ represents an average gray value of pixels in the cells in the cell image, $S_\mathrm{z}$ represents the pixel area of the cells in the cell image, and a sum of a, b, and c equals 1.

The second score is calculated based on the following formula:

$$S_{second-scor} = \mathrm{m} * S_\mathrm{p} + \mathrm{n} * S_\mathrm{q},$$

where $S_\mathrm{p}$ represents the pixel area of the cells in the spatial transcriptomic data image, $S_\mathrm{q}$ represents the number of RNA in the cells in the spatial transcriptomic data image, and a sum of m and n equals 1.

Preferably, registering the cell image and the spatial transcriptomic data image according to the registration parameter includes:

- transforming the cell image based on the registration parameter; and
- registering the transformed cell image to the spatial transcriptomic data image.

Preferably, acquiring a plurality of corresponding points in the two-dimensional point cloud set of the cell image and the two-dimensional point cloud set of the spatial transcriptomic data image includes:

- calculating a Euclidean distance between each point in the two-dimensional point cloud set of the cell image and each point in the two-dimensional point cloud set of the spatial transcriptomic data image; and
- determining every two points with a smallest Euclidean distance as the corresponding points.

Preferably, the preset condition includes:

- the objective function is less than a convergence distance threshold; and/or
- the number of updates reaches an update threshold.

Preferably, the convergence distance threshold is positively correlated with an inter-cellular space in the cell image and the spatial transcriptomic data image.

Preferably, the objective function is:

$$D = \sum_{\mathrm{i}=1}^{\mathrm{N}} ||a_\mathrm{i} - (R * b_\mathrm{i} + T)||^2,$$

where D represents the objective function, i represents the number of updates, N represents the number of pairs of the corresponding points, $a_\mathrm{i}$ represents a point in the two-dimensional point cloud set of the cell image, $b_\mathrm{i}$ represents a point corresponding to $a_\mathrm{i}$ in the two-dimensional point cloud set of the spatial transcriptomic data image, R represents the rotation parameter, and T represents the translation parameter.

A cell image registration system is provided, which includes:

- an acquisition module configured to acquire cell contours from both a cell image and a spatial transcriptomic data image, where the cell image and the spatial transcriptomic data image have a correspondence relationship;
- a target cell determination module configured to determine specific target cells based on the clarity of the respective cell contours;
- an extraction module configured to extract geometric centers of the specific target cells, to respectively form a two-dimensional point cloud set corresponding to the cell image and a two-dimensional point cloud set corresponding to the spatial transcriptomic data image;

- a registration parameter acquisition module configured to process the two-dimensional point cloud set of both the cell image and the spatial transcriptomic data image based on a point cloud registration algorithm to obtain registration parameters; and

- a registration module configured to register the cell image and the spatial transcriptomic data image according to the registration parameter.

An electronic device is provided, which includes a memory, a processor, and a computer program stored in the memory and executable by the processor, where the computer program, when executed by the processor, causes the processor to implement the cell image registration method according to any of the embodiments of the present disclosure.

A computer-readable storage medium is provided, which has a computer program stored thereon, where the computer program, when executed by a processor, causes the processor to implement the cell image registration method according to any of the embodiments of the present disclosure.

The present disclosure has the following advantages. According to the present disclosure, cell contours in the cell image and in the spatial transcriptomic data image and the clarity of the cell contours are acquired to respectively determine specific target cells. Then, a two-dimensional point cloud set corresponding to the cell image and a two-dimensional point cloud set corresponding to the spatial transcriptomic data image are respectively formed based on the geometric centers of the specific target cells and processed using a point cloud registration algorithm. Finally, a registration parameter is acquired to register the cell image and the spatial transcriptomic data image. The present disclosure overcomes the defect of being unable to perform an accurate in-situ analysis of the cell digital image and the spatial transcriptomic data image in the existing technology, and improves the accuracy of the Stereo-seq spatial transcriptomics technology.

**BRIEF DESCRIPTION OF DRAWINGS**

FIG. 1 is a flowchart of a cell image registration method according to Embodiment 1 of the present disclosure.

FIG. 2 is a schematic diagram of segmented cell contours in a cell image according to Embodiment 1 of the present disclosure.

FIG. 3 is a schematic diagram of segmented cell contours in a spatial transcriptomic data image according to Embodiment 1 of the present disclosure.

FIG. 4 illustrates a cell image to be registered according to Embodiment 1 of the present disclosure.

FIG. 5 illustrates a spatial transcriptomic data image to be registered according to Embodiment 1 of the present disclosure.

FIG. 6 is a schematic diagram of a result of a two-dimensional point cloud set of a cell image according to Embodiment 1 of the present disclosure.

FIG. 7 is a schematic diagram of a result of a two-dimensional point cloud set of a spatial transcriptomic data image according to Embodiment 1 of the present disclosure.

FIG. 8 is a partial flowchart of a cell image registration method according to Embodiment 1 of the present disclosure.

FIG. 9 is a partial flowchart of a cell image registration method according to Embodiment 1 of the present disclosure.

FIG. 10 is a schematic block diagram of a cell image registration system according to Embodiment 2 of the present disclosure.

FIG. 11 is a schematic structural diagram of an electronic device according to Embodiment 3 of the present disclosure.

**DETAILED DESCRIPTION**

The present disclosure will be further described below through embodiments, but it is not limited to the scope of the embodiments.

**Embodiment 1**

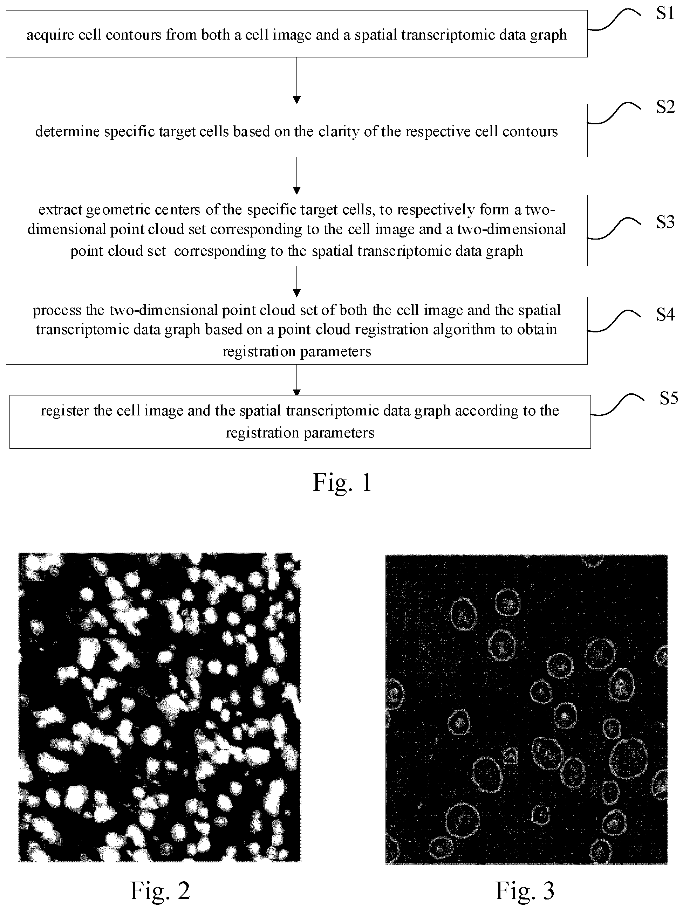

The present disclosure provides a cell image registration method. Referring to FIG. 1, the cell image registration method includes a plurality of following steps.

In a step of S1, cell contours from both a cell image and a spatial transcriptomic data image are acquired, where the cell image and the spatial transcriptomic data image have a correspondence relationship.

The cell image is a digital image of cells captured by an optical instrument (such as a microscope, etc.). Firstly, the cell contours in the cell image are acquired. The cell contours in the cell image may be generated through algorithmic segmentation based on gray value information of the image. FIG. 2 illustrates an image in which cell contours can be clearly observed, where highlighted regions in the figure are cell regions. The cell contours may be segmented using a deep-learning model Deepcell (which is a high-precision cell recognition engine based on deep-learning technology) or a conventional watershed algorithm, with irregular circles being recognized as the cell contours. The cell contours in the spatial transcriptomic data image may also be obtained by circling. The cell contours are segmented mainly based on the spatial density of RNA. FIG. 3 illustrates an image in which segmented cell contours can be clearly observed, where highlighted regions (local aggregation regions) in the figure are cell regions, and irregular circles are the cell contours. In addition, the cell contours may also be segmented using a cell bin image processing process for the stereo-seq technology or using other algorithms and manual tools. Further, the cell image and the spatial transcriptomic data image having a correspondence relationship means that the cell image and the spatial transcriptomic data image are images obtained by processing cells in the same region. For example, the result of circling cells in the cell image may be stored in the form of a binary image, which is generally referred to as a cell mask, where the pixel value of 0 represents the background (a region outside the cell contour), and the pixel value of 1 represents a cell (a region within the cell contour).

In a step of S2, specific target cells are determined based on the clarity of the respective cell contours.

Based on the clarity of the cell contours segmented in the cell image and the spatial transcriptomic data image, specific cells are respectively determined as target cells, which will be used as a basis for the subsequent registration parameter calculation.

In a step of S3, geometric centers of the specific target cells are extracted, to respectively form a two-dimensional point cloud set corresponding to the cell image and a two-dimensional point cloud set corresponding to the spatial transcriptomic data image.

The extraction of the geometric centers of the cells in the cell image and the spatial transcriptomic data image is for the purpose of roughly locating the positions of the cells to obtain relative positions between the specific target cells. The two-dimensional point cloud set of the cell image and the two-dimensional point cloud set of the spatial transcriptomic data image are respectively formed according to the geometric centers of the specific target cells. Each of the point cloud sets contain a large amount of point cloud data. A method for obtaining the two-dimensional point cloud set from the cell image and the spatial transcriptomic data image may be as follows. For each target cell (each irregular circular connected domain) segmented out, coordinate values of the geometric center point of pixel points of the target cell in an x direction and a y direction are acquired and used as a geometric center of the current segmented target cells (if the geometric center is the center of mass, then mean values of the pixel points of the target cell in the x direction and the y direction are acquired). The geometric centers of all the target cells in the cell image and the spatial transcriptomic data image are extracted respectively, and coordinate points (x, y) of these geometric centers are respectively stored (for example, in a .txt file) as the two-dimensional point cloud set of the cell image and the two-dimensional point cloud set of the spatial transcriptomic data image.

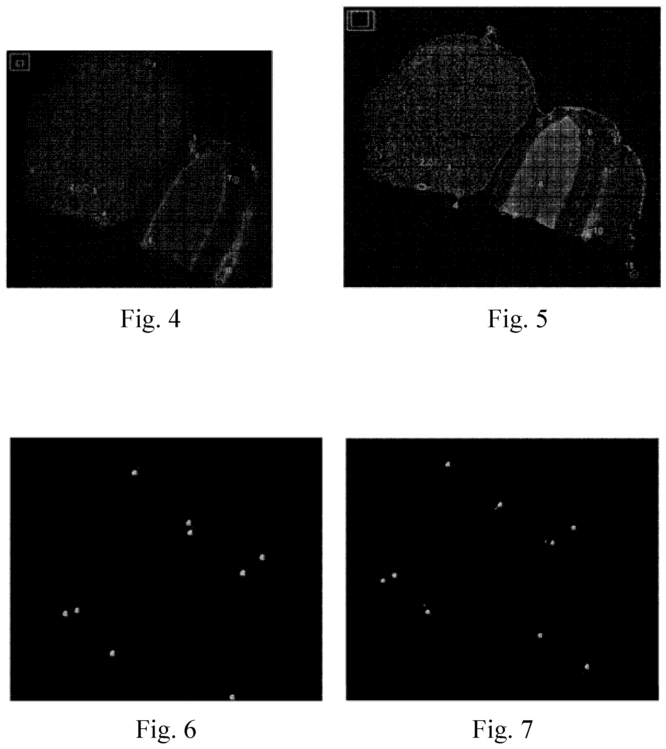

Refer to FIG. 4 and FIG. 5. FIG. 4 illustrates a cell image to be registered. Numerals in FIG. 4 are serial numbers of segmented cells. The serial numbers are respectively used for indexing the segmented cells. FIG. 5 illustrates a spatial transcriptomic data image. Numerals in FIG. 5 are serial numbers of segmented cells. Refer to FIG. 6 and FIG. 7. FIG. 6 is a schematic diagram of a result of the two-dimensional point cloud set of the cell image. FIG. 7 is a schematic diagram of a result of the two-dimensional point cloud set of the spatial transcriptomic data image.

In a step of S4, both the two-dimensional point cloud set of the cell image and the two-dimensional point cloud set of the spatial transcriptomic data image are processed based on a point cloud registration algorithm to obtain a registration parameter.

The point cloud registration algorithm may be an Iterative Closest Point (ICP) algorithm.

In a step of S5, the cell image and the spatial transcriptomic data image are registered according to the registration parameter.

The cell image is transformed according to the obtained registration parameters, thereby achieving registration between the transformed cell image and the spatial transcriptomic data image.

By acquiring the cell contours and their clarity in both the cell image and the spatial transcriptomic data image, specific target cells are respectively determined. Then, the two-dimensional point cloud set of the cell image and the two-dimensional point cloud set of the spatial transcriptomic data image are respectively formed based on the geometric centers of the specific target cells, and these point cloud sets are registered by a point cloud registration algorithm. Finally, a registration parameter is acquired to register the cell image and the spatial transcriptomic data image. The present disclosure overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the geometric center includes a center of mass, and the step S3 includes a following step.

The centers of mass of cells in the cell image and the spatial transcriptomic data image are extracted using a center-of-mass method to respectively form the two-dimensional point cloud set of the cell image and the two-dimensional point cloud set of the spatial transcriptomic data image.

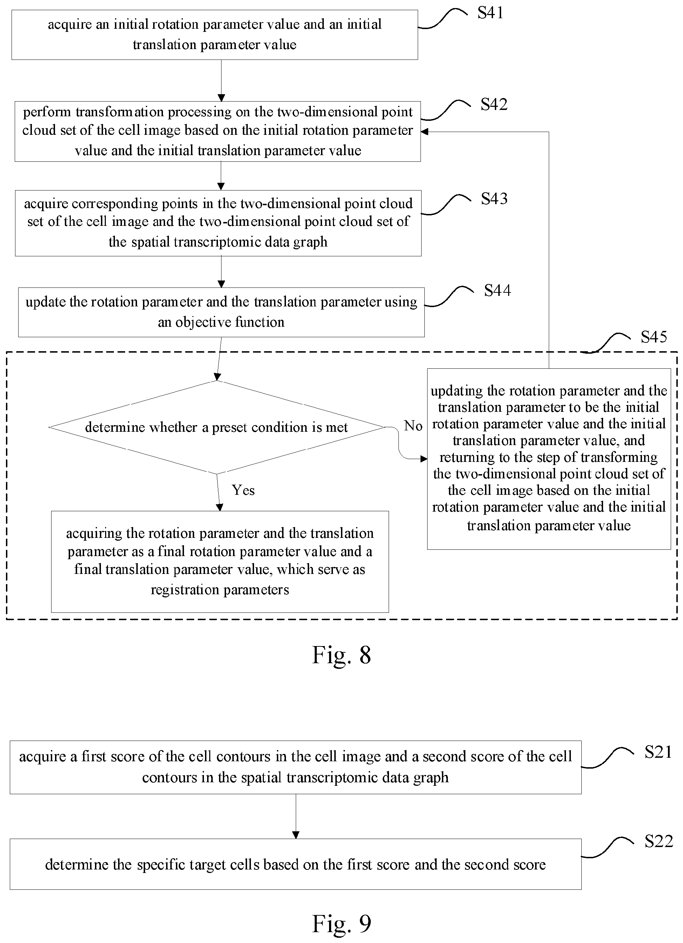

In an optional implementation, the registration parameter includes a rotation parameter and a translation parameter. Referring to FIG. 8, the step S4 includes a plurality of following steps.

In a step of S41, an initial rotation parameter value and an initial translation parameter value are acquired.

In a step of S42, a transformation processing is performed on the two-dimensional point cloud set of the cell image based on the initial rotation parameter value and the initial translation parameter value.

It is assumed that the two-dimensional point cloud set of the cell image is A and the two-dimensional point cloud set of the spatial transcriptomic data image is B, while the rotation parameter R and the translation parameter T are randomly initialized to obtain the initial rotation parameter value and the initial translation parameter value. The two-dimensional point cloud A of the cell image is processed based on the initial rotation parameter value and the initial translation parameter value.

In a step of S43, corresponding points in the two-dimensional point cloud set of the cell image and the two-dimensional point cloud set of the spatial transcriptomic data image are acquired.

A distance between each point in the two-dimensional point cloud set A of the cell image and each point in the two-dimensional point cloud set B of the spatial transcriptomic data image is calculated, and every two points with the smallest distance are determined as the corresponding points, thereby obtaining corresponding point pairs $a_i$ and $b_i$, $a_{i+1}$ and $b_{i+1}$, ..., $a_{N-1}$ and $b_{N-1}$, and $a_N$ and $b_N$.

In a step of S44, the rotation parameter and the translation parameter are updated using an objective function configured to process the acquired corresponding points.

The objective function is optimized using a least square method to obtain the updated rotation parameter R and translation parameter T.

In a step of S45, it is determined whether a preset condition is met. If the preset condition is met, the rotation parameter and the translation parameter are respectively selected as a final rotation parameter value and a final translation parameter value, and are determined as the registration parameter.

If the preset condition is not met, the rotation parameter and the translation parameter are respectively updated to the initial rotation parameter value and the initial translation parameter value, and the method is returned to the operation of performing the transformation processing on the two-dimensional point cloud set of the cell image based on the initial rotation parameter value and the initial translation parameter value.

The preset condition includes that: the objective function is less than a convergence distance threshold; and/or the number of updates reaches an update threshold. When the number of updates is equal to the update threshold or the objective function is less than the convergence distance threshold, the update iteration is ended, and the final rotation parameter value and the final translation parameter value are obtained. When the two conditions are used in combination, the result of the update will be more accurate. The objective function may be:

$$D = \sum_{i=1}^{N}||a_i - (R * b_i + T)||^2,$$

where D represents the objective function, i represents the number of updates, N represents the number of pairs of the corresponding points, $a_i$ represents a point in the two-dimensional point cloud set of the cell image, $b_i$ represents a point corresponding to $a_i$ in the two-dimensional point cloud set of the spatial transcriptomic data image, R represents the rotation parameter, and T represents the translation parameter.

It is determined whether the iteration of updating the rotation parameter R and translation parameter T satisfies the preset condition. If so, the latest updated rotation parameter and translation parameter are selected as the final rotation parameter value and the final translation parameter value. If not, the rotation parameter and the translation parameter updated in the step S44 are used as the initial rotation parameter value and the initial translation parameter value, and the method is returned to the step S42 to continue to update the rotation parameter R and the translation parameter T.

In this implementation, more accurate rotation parameter and translation parameter can be obtained by optimizing and updating the rotation parameter and the translation parameter. Therefore, the scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, referring to FIG. 9, the step S2 includes a plurality of following steps.

In a step of S21, a first score of the cell contours in the cell image and a second score of the cell contours in the spatial transcriptomic data image are acquired, where both the first score and the second score are positively correlated with the clarity.

In a step of S22, the specific target cells are determined based on the first score and the second score.

The first score is calculated based on at least one of the following derived from the cell image, the eccentricity, the pixel gray value within the cell, and the pixel area of the cell. It should be understood by those having ordinary skills in the art that a more accurate first score can be obtained through calculation based on all the three factors, i.e., the eccentricity, the pixel gray value, and the pixel area. A higher first score indicates a higher clarity of the cells in the cell image. The second score is calculated based on at least one of the following derived from the spatial transcriptomic data image, the amount of RNA and the pixel area of the cell. A more accurate second score can be obtained through calculation based on both the two factors, i.e., the number of RNA and the pixel area. A higher second score indicates a higher clarity of the cells in the spatial transcriptomic data image. The specific target cells are respectively selected according to the first score and the second score, and the target cell is a basis for the subsequent registration parameter calculation.

In this implementation, the target cells are more accurately selected from the specific target cells according to the first score and the second score, thereby obtaining a more accurate registration parameter. Therefore, the scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the specific target cells represent: a preset proportion of cells or a preset number of cells selected from the cell image according to the first score; a preset proportion of cells or a preset number of cells selected from the spatial transcriptomic data image according to the second score.

For example, in one image registration process, 15% of all the cells in the cell image are selected according to the first score, and 15% of all the cells in the spatial transcriptomic data image are selected according to the second score. These target cells form the basis for the subsequent registration parameter calculation. The preset proportion and the preset number are determined according to the actual situation.

In this implementation, a more accurate registration parameter can be obtained by selecting the preset proportion of cells as the target cells or selecting the preset number of cells as the target cells. Therefore, the scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the first score and the second score are respectively determined based on the following formulas.

$$S_{first-score} = a/S_{\mathrm{x}} + \mathrm{b} * S_{\mathrm{y}} + \mathrm{c} * S_{\mathrm{z}},$$

where $S_{\mathrm{x}}$ represents the eccentricity of the cells in the cell image, $S_{\mathrm{y}}$ represents an average gray value of pixels in the cells in the cell image, $S_{\mathrm{z}}$ represents the pixel area of the cells in the cell image, and a sum of a, b, and c equals 1. It should be understood by those having ordinary skills in the art that the values of a, b, and c may be set according to an actual situation.

In a preferred scheme, when a = 0.3, b = 0.4, and c = 0.3, the obtained first score is more accurate, and can more accurately represent the clarity.

$$S_{second-score} = \mathrm{m} * S_{\mathrm{p}} + \mathrm{n} * S_{\mathrm{q}},$$

where $S_{\mathrm{p}}$ represents the pixel area of the cells in the spatial transcriptomic data image, $S_{\mathrm{q}}$ represents the number of RNA in the cells in the spatial transcriptomic data image, and a sum of m and n equals 1. It should be understood by those having ordinary skills in the art that the values of m and n may be set according to an actual situation.

In a preferred scheme, when m = 0.4 and n = 0.6, the obtained second score is more accurate, and can more accurately represent the clarity.

In this implementation, the specific target cells can be more accurately selected according to the calculation formulas of the first score and the second score, thereby obtaining a more accurate registration parameter. Therefore, the scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the step S5 includes a following step.

The cell image is transformed based on the registration parameter to complete a registration between the transformed cell image and the spatial transcriptomic data image.

After the registration parameter is obtained, only the cell image is transformed based on the registration parameter, and the spatial transcriptomic data image remains unchanged. A rotation angle is determined according to the rotation parameter in the registration parameter. Then, a translation length and direction of x-axis and y-axis are determined according to the translation parameter. Finally, the cell image is transformed according to both the rotation angle and the translation vector, so that the transformed cell image is registered to the spatial transcriptomic data image.

In this implementation, the cell image is transformed according to the obtained registration parameter, so that the transformed cell image is registered to the spatial transcriptomic data image. Therefore, this scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the step S43 includes a following step.

A Euclidean distance between each point in the two-dimensional point cloud set of the cell image and each point in the two-dimensional point cloud set of the spatial transcriptomic data image is calculated, then every two points with a smallest Euclidean distance are determined as the corresponding points.

A Euclidean distance between each point in the two-dimensional point cloud set A of the cell image and each point in the two-dimensional point cloud set B of the spatial transcriptomic data image is calculated, and every two points with a smallest Euclidean distance are determined as the corresponding points, thereby obtaining corresponding point pairs $a_i$ and $b_i$, $a_{i+1}$ and $b_{i+1}$, ..., $a_{N-1}$ and $b_{N-1}$, and $a_N$ and $b_N$. It should be understood by those having ordinary skills in the art that, although the method of determining the corresponding points according to the Euclidean distance is accurate in the present disclosure, a metric other than the Euclidean distance may also be used.

In this implementation, a more accurate registration parameter can be obtained by determining the corresponding points in the two-dimensional point cloud set of the cell image and in the two-dimensional point cloud set of the spatial transcriptomic data image according to the Euclidean distance. Therefore, this scheme overcomes the defect of being unable to perform an accurate in-situ analysis of a cell digital image and a spatial transcriptomic data image in the existing technology, and improves the accuracy of the Stereo-seq spatial transcriptomics technology.

In an optional implementation, the convergence distance threshold is positively correlated with an inter-cellular space in the cell image and the spatial transcriptomic data image.

The convergence distance threshold should be determined based on both the inter-cellular space in the cell image and the spatial transcriptomic data image to be registered in practice, and the distribution characteristics of different types of cells. Preferably, the convergence distance threshold is positively correlated with the magnitude of the inter-cellular space in the cell image and the spatial transcriptomic data image.

In this implementation, the registration parameter can be updated more accurately according the objective function by determining the convergence distance threshold based on the inter-cellular space in the cell image and the spatial transcriptomic data image to be registered in practice. This enables more accurate registration parameter to be obtained. Therefore, the scheme overcomes the defect of being unable to perform an accurate in-situ analysis of a cell digital image and a spatial transcriptomic data image in the existing technology, and improves the accuracy of the Stereo-seq spatial transcriptomics technology.

**Embodiment 2**

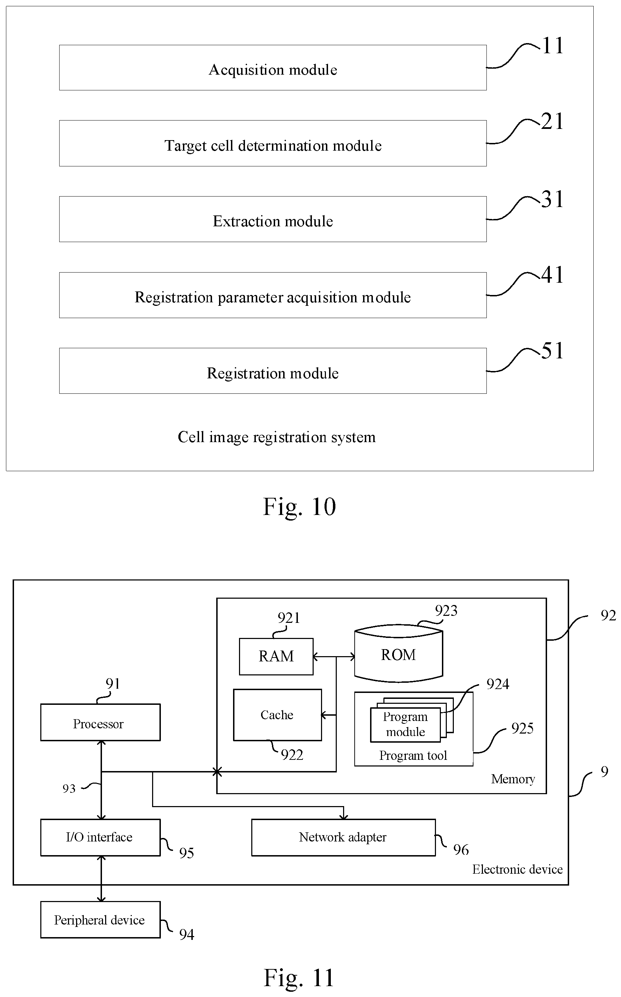

This embodiment provides a cell image registration system. FIG. 10 is a schematic block diagram of this embodiment. Referring to FIG. 10, the cell image registration system in this embodiment includes a plurality of following modules.

An acquisition module 11 is configured to acquire cell contours from both a cell image and a spatial transcriptomic data image, where the cell image and the spatial transcriptomic data image have a correspondence relationship.

The cell image is a digital image of cells captured by an optical instrument (such as a microscope, etc.). Firstly, the cell contours in the cell image are acquired. The cell contours in the cell image may be obtained by circling. The cell contours are segmented mainly based on gray value information of the image. FIG. 2 illustrates an image in which segmented cell contours can be clearly observed, where highlighted regions in the figure are cell regions. The cell contours may be segmented using a deep-learning model Deepcell (which is a high-precision cell recognition engine based on a deep-learning technology) or a conventional watershed algorithm, with irregular circles being recognized as the cell contours. The cell contours in the spatial transcriptomic data image may also be obtained by circling. The cell contours are segmented mainly based on the spatial density of RNA. FIG. 3 illustrates an image in which segmented cell contours can be clearly observed, where highlighted regions (local aggregation regions) in the figure are cell regions, and irregular circles are the cell contours. In addition, the cell contours may also be segmented using a cell bin image processing process for the stereo-seq technology or using other algorithms and manual tools. Further, the cell image and the spatial transcriptomic data image having a correspondence relationship means that the cell image and the spatial transcriptomic data image are images obtained by processing cells in the same region. For example, the result of circling cells in the cell image may be stored in the form of a binary image, which is generally referred to as a cell mask, where a pixel value of 0 represents the background (a region outside the cell contour), and a pixel value of 1 represents a cell (a region within the cell contour).

A target cell determination module 21 is configured to determine specific target cells based on the clarity of the respective cell contours.

Based on the clarity of the cell contours segmented in the cell image and the spatial transcriptomic data image, some cells are respectively determined as target cells, which will be used as a basis for the subsequent registration parameter calculation.

A extraction module 31 is configured to extract geometric centers of the specific target cells, to respectively form a two-dimensional point cloud set corresponding to the cell image and a two-dimensional point cloud set corresponding to the spatial transcriptomic data image.

The extraction of the geometric centers of the cells in the cell image and the spatial transcriptomic data image is for the purpose of roughly locating the positions of the cells to obtain relative positions between the specific target cells. The two-dimensional point cloud set of the cell image and the two-dimensional point cloud set of the spatial transcriptomic data image are respectively formed according to the geometric centers of the specific target cells. Each of the point cloud sets contain a large amount of point cloud data. A method for obtaining the two-dimensional point cloud set of the cell image and the two-dimensional point cloud set of the spatial transcriptomic data image may be as follows. For each target cell (each irregular circular connected domain) segmented out, coordinate values of a geometric center point of pixel points of the target cell in an x direction and a y direction are acquired and used as a geometric center of the current segmented target cells. The geometric centers of all the target cells segmented in the cell image and the spatial transcriptomic data image are extracted respectively, and coordinate points (x, y) of these geometric centers are respectively stored (for example, in a .txt file) as the two-dimensional point cloud set of the cell image and the two-dimensional point cloud set of the spatial transcriptomic data image.

Refer to FIG. 4 and FIG. 5. FIG. 4 illustrates a cell image to be registered. Numerals in FIG. 4 are serial numbers of segmented cells. FIG. 5 illustrates a spatial transcriptomic data image. Numerals in FIG. 5 are serial numbers of segmented cells. Refer to FIG. 6 and FIG. 7. FIG. 6 is a schematic diagram of a result of the two-dimensional point cloud set of the cell image. FIG. 7 is a schematic diagram of a result of the two-dimensional point cloud set of the spatial transcriptomic data image.

A registration parameter acquisition module 41 is configured to process the two-dimensional point cloud set of both the cell image and the spatial transcriptomic data image based on a point cloud registration algorithm to obtain registration parameters.

The point cloud registration algorithm may be an ICP algorithm.

A registration module 51 is configured to register the cell image and the spatial transcriptomic data image according to the registration parameter.

The cell image is transformed according to the obtained registration parameter, so that the transformed cell image is registered to the spatial transcriptomic data image.

In this embodiment, cell contours in the cell image and in the spatial transcriptomic data image and the clarity of the cell contours are acquired to respectively determine specific target cells. Then, a two-dimensional point cloud set corresponding to the cell image and a two-dimensional point cloud set corresponding to the spatial transcriptomic data image are respectively formed based on the geometric centers of the specific target cells, and processed using a point cloud registration algorithm. Finally, a registration parameter is acquired to register the cell image and the spatial transcriptomic data image. The present disclosure overcomes the defect of being unable to perform an accurate in-situ analysis of a cell digital image and a spatial transcriptomic data image in the existing technology, and improves the accuracy of the Stereo-seq spatial transcriptomics technology.

**Embodiment 3**

This embodiment provides an electronic device which may be embodied as a computing device (e.g., a server device). The electronic device includes a memory, a processor, and a computer program stored in the memory and executable by the processor. The computer program, when executed by the processor, causes the processor to implement the cell image registration method provided in Embodiment 1.

FIG. 11 is a schematic structural diagram of the hardware of this embodiment. As shown in FIG. 11, the electronic device 9 includes a plurality of following components.

At least one processor 91, at least one memory 92, and a bus 93 configured to connect different system components (including the at least one processor 91 and the at least one memory 92) are includes in the electronic device.

The bus 93 includes a data bus, an address bus, and a control bus.

The memory 92 includes a volatile memory, such as a Random Access Memory (RAM) 921 and/or a cache 922, and may further include a Read-Only Memory (ROM) 923.

The memory 92 also includes a program/utility 925 having a set of (at least one) program modules 924. The program modules 924 include, but not limited to, an operating system, one or more applications, other program modules, and program data. Each or a combination of these examples may include implementations of a network environment.

The processor 91 executes a computer program stored in the memory 92 to execute various functional applications and data processing, e.g., the cell image registration method provided in Embodiment 1 of the present disclosure.

The electronic device 9 may further communicate with one or more peripheral devices 94. The communication may be performed via an input/output (I/O) interface 95. The electronic device 9 may also communicate with one or more networks (e.g., a Local Area Network (LAN), a Wide Area Network (WAN), and/or a public network, such as the Internet) through a network adapter 96. The network adapter 96 communicates with other modules of the electronic device 9 via the bus 93. It should be understood that although not shown in the figures, other hardware and/or software modules may be used in combination with the electronic device 9. The hardware and/or software modules include, but not limited to, a microcode, a device drive, a redundant processor, an external disk drive array, a Redundant Array of Independent Disks (RAID) system, a tape drive, a data backup storage system, etc.

It should be noted that although several units/modules or sub-units/sub-modules of the electronic device are mentioned in the above detailed description, such division is merely exemplary and not mandatory. Indeed, according to the embodiments of the present disclosure, the features and functions of two or more units/modules described above may be embodied in one unit/module. Similarly, the features and functions of one unit/module described above may be further divided and embodied in a plurality of units/modules.

**Embodiment 4**

This embodiment provides a computer-readable storage medium, which has a computer program stored thereon. The computer program, when executed by a processor, causes the processor to implement the cell image registration method provided in Embodiment 1.

Examples of the computer-readable storage medium may include, but not limited to, a portable disk, a hard disk, a RAM, a ROM, an Erasable Programmable ROM (EPROM), an optical storage device, a magnetic storage device, or any suitable combination thereof.

In a possible implementation, the present disclosure may also be implemented in the form of a program product including program code. When the program product is run on a terminal device, the program code causes the terminal device to implement the cell image registration method provided in Embodiment 1.

The program code for executing the present disclosure may be compiled in any combination of one or more programming languages. The program code can be entirely executed on a user device, partly executed on a user device, executed as a separate software package, partly executed on a user device and partly executed on a remote device, or entirely executed on a remote device.

Although specific embodiments of the present disclosure have been described above, it should be understood by those having ordinary skills in the art that these embodiments are merely examples, and various changes or modifications may be made to these embodiments without departing from the principle and scope of protection of the present disclosure. Therefore, the scope of protection of the present disclosure is subject to the appended claims.

**Claims**

1. A cell image registration method, comprising:

   acquiring cell contours from both a cell image and a spatial transcriptomic data image, wherein the cell image and the spatial transcriptomic data image have a correspondence relationship;
   determining a plurality of specific target cells based on the clarity of the respective cell contours;
   extracting a geometric center of each of the plurality of specific target cells to form a two-dimensional point cloud set corresponding to the cell image and a two-dimensional point cloud set corresponding to the spatial transcriptomic data image;
   processing the two-dimensional point cloud set of both the cell image and the spatial transcriptomic data image based on a point cloud registration algorithm to obtain registration parameters; and
   registering the cell image and the spatial transcriptomic data image according to the registration parameters.

2. The cell image registration method of claim 1, wherein the registration parameter comprises a rotation parameter and a translation parameter, and processing the two-dimensional point cloud set of both the cell image and the spatial transcriptomic data image based on a point cloud registration algorithm to obtain registration parameters comprises:

   acquiring an initial rotation parameter value and an initial translation parameter value;
   performing a transformation processing on the two-dimensional point cloud set of the cell image based on the initial rotation parameter value and the initial translation parameter value;
   acquiring a plurality of corresponding points in the two-dimensional point cloud set of the cell image and the two-dimensional point cloud set of the spatial transcriptomic data image;
   updating the rotation parameter and the translation parameter using an objective function configured to process the acquired corresponding points;
   determining whether a preset condition is met; if yes, acquiring the rotation parameter and the translation parameter as a final rotation parameter value and a final translation parameter value, which serve as registration parameters; if no, updating the rotation parameter and the translation parameter to be the initial rotation parameter value and the initial translation parameter value, and returning to the step of transforming the two-dimensional point cloud set of the cell image based on the initial rotation parameter value and the initial translation parameter value.

3. The cell image registration method of claim 1, wherein determining a plurality of specific target cells based on the clarity of the respective cell contours comprises:

   acquiring a first score of the plurality of cell contours in the cell image and a second score of the plurality of cell contours in the spatial transcriptomic data image, wherein both the first score and the second score are positively correlated with the clarity; and
   determining the plurality of specific target cells based on the first score and the second score, wherein the first score is calculated based on at least one of the following derived from the cell image, the eccentricity of the cell, the pixel gray value within the cell, and the pixel area of the cell, and
   the second score is calculated based on at least one of the following derived from the spatial transcriptomic data image, the amount of RNA and the pixel area of the cell.

4. The cell image registration method of claim 3, wherein the plurality of specific target cells consists of cells selected from the cell image based on the first score, said selection comprising either a preset proportion of cells or a preset number of cells; and

a preset proportion of cells or a preset number of cells are selected from the spatial transcriptomic data image according to the second score.

5. The cell image registration method of claim 3, wherein the first score is determined based on the following formula:

$$S_{first-score} = a/S_{\mathrm{x}} + b * S_{\mathrm{y}} + c * S_{\mathrm{z}},$$

   wherein $S_{\mathrm{x}}$ represents the eccentricity of the cells in the cell image, $S_{\mathrm{y}}$ represents an average gray value of pixels within the cells in the cell image, $S_{\mathrm{z}}$ represents the pixel area of the cells in the cell image, and a sum of a, b, and c equals 1; and
   the second score is determined based on the following formula:

$$S_{second-score} = m * S_{\mathrm{p}} + n * S_{\mathrm{q}},$$

   wherein $S_{\mathrm{p}}$ represents the pixel area of the cells in the spatial transcriptomic data image, $S_{\mathrm{q}}$ represents the number of RNA within the cells in the spatial transcriptomic data image, and a sum of m and n equals 1.

6. The cell image registration method of claim 2, wherein registering the cell image and the spatial transcriptomic data image according to the registration parameter comprises:

   transforming the cell image based on the registration parameter; and
   registering the cell image and the spatial transcriptomic data image.

7. The cell image registration method of claim 2, wherein acquiring a plurality of corresponding points in the two-dimensional point cloud set of the cell image and the two-dimensional point cloud set of the spatial transcriptomic data image comprises:

   calculating a Euclidean distance between each point in the two-dimensional point cloud set of the cell image and each point in the two-dimensional point cloud set of the spatial transcriptomic data image; and
   determining the pair of points with the smallest Euclidean distance between the two point cloud sets as the corresponding points.

8. The cell image registration method of claim 2, wherein the preset condition comprises that:

   The value of the objective function is less than a convergence distance threshold; and/or

the number of updates reaches an update threshold.

9. The cell image registration method of claim 8, wherein the convergence distance threshold is positively correlated with an inter-cellular space in the cell image and the spatial transcriptomic data image.

10. The cell image registration method of claim 2, wherein the objective function is:

$$D = \sum_{\mathrm{i}=1}^{\mathrm{N}} ||a_{\mathrm{i}} - (R * b_{\mathrm{i}} + T)||^2,$$

    wherein D represents the value of the objective function, i represents the number of updates, N represents the number of pairs of the corresponding points, $a_{\mathrm{i}}$ represents a point in the two-dimensional point cloud set of the cell image, $b_{\mathrm{i}}$ represents the point corresponding to $a_{\mathrm{i}}$ in the two-dimensional point cloud set of the spatial transcriptomic data image, R represents the rotation parameter, and T represents the translation parameter.

11. A cell image registration system, comprising:

    an acquisition module configured to acquire cell contours from both a cell image and a spatial transcriptomic data image, wherein the cell image and the spatial transcriptomic data image have a correspondence relationship;
    a target cell determination module configured to determine a plurality of specific target cells based on the clarity of the respective cell contours;
    an extraction module configured to extract a geometric center of each of the plurality of specific target cells to respectively form a two-dimensional point cloud set corresponding to the cell image and a two-dimensional point cloud set corresponding to the spatial transcriptomic data image;
    a registration parameter acquisition module configured for processing the two-dimensional point cloud set of both the cell image and the spatial transcriptomic data image based on a point cloud registration algorithm to obtain registration parameters; and
    a registration module configured for registering the cell image and the spatial transcriptomic data image according to the registration parameter.

12. An electronic device, comprising a memory, a processor, and a computer program stored in the memory and executable by the processor, wherein the computer program, when executed by the processor, causes the processor to perform the cell image registration method of any one of claims 1 to 10.

13. A computer-readable storage medium, having a computer program stored thereon, wherein the computer program, when executed by a processor, causes the processor to perform the cell image registration method of any one of claims 1 to 10.

| | |
|---|---|
| acquire cell contours from both a cell image and a spatial transcriptomic data graph | S1 |

| | |
|---|---|
| determine specific target cells based on the clarity of the respective cell contours | S2 |

| | |
|---|---|
| extract geometric centers of the specific target cells, to respectively form a two-dimensional point cloud set corresponding to the cell image and a two-dimensional point cloud set corresponding to the spatial transcriptomic data graph | S3 |

| | |
|---|---|
| process the two-dimensional point cloud set of both the cell image and the spatial transcriptomic data graph based on a point cloud registration algorithm to obtain registration parameters | S4 |

| | |
|---|---|
| register the cell image and the spatial transcriptomic data graph according to the registration parameters | S5 |

Fig. 1

Fig. 2

Fig. 3

Fig. 4

Fig. 5

Fig. 6

Fig. 7

acquire an initial rotation parameter value and an initial translation parameter value ⟋⌒ S41

perform transformation processing on the two-dimensional point cloud set of the cell image based on the initial rotation parameter value and the initial translation parameter value ⟋⌒ S42

acquire corresponding points in the two-dimensional point cloud set of the cell image and the two-dimensional point cloud set of the spatial transcriptomic data graph ⟋⌒ S43

update the rotation parameter and the translation parameter using an objective function ⟋⌒ S44

⟋⌒ S45

determine whether a preset condition is met

No — updating the rotation parameter and the translation parameter to be the initial rotation parameter value and the initial translation parameter value, and returning to the step of transforming the two-dimensional point cloud set of the cell image based on the initial rotation parameter value and the initial translation parameter value

Yes

acquiring the rotation parameter and the translation parameter as a final rotation parameter value and a final translation parameter value, which serve as registration parameters

Fig. 8

acquire a first score of the cell contours in the cell image and a second score of the cell contours in the spatial transcriptomic data graph ⟋⌒ S21

determine the specific target cells based on the first score and the second score ⟋⌒ S22

Fig. 9

Acquisition module ~11

Target cell determination module ~21

Extraction module ~31

Registration parameter acquisition module ~41

Registration module ~51

Cell image registration system

## Fig. 10

921 923 92

RAM ROM

924
91

Cache Program
module

Processor
925

922 Program tool

Memory

9
93

I/O interface Network adapter

95 96

Electronic device

Peripheral device

94

## Fig. 11

## INTERNATIONAL SEARCH REPORT

| | International application No. |
|---|---|
| | **PCT/CN2022/143924** |

**A. CLASSIFICATION OF SUBJECT MATTER**

G06V10/22(2022.01)i

According to International Patent Classification (IPC) or to both national classification and IPC

**B. FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 细胞, 时空组学, 空间转录, 匹配, 配准, 配对, 原位, 点云, 轮廓, 清晰, 参数, stereo-seq, outline, registration, point, cloud, cell, match

**C. DOCUMENTS CONSIDERED TO BE RELEVANT**

| Category* | Citation of document, with indication, where appropriate, of the relevant passages | Relevant to claim No. |
|---|---|---|
| A | US 2022068438 A1 (THE BROAD INSTITUTE, INC. et al.) 03 March 2022 (2022-03-03) description, paragraphs 0009-0011 | 1-13 |
| A | US 2022148282 A1 (SHIMADZU CORPORATION) 12 May 2022 (2022-05-12) entire document | 1-13 |
| A | CN 114187239 A (HUASHAN HOSPITAL, FUDAN UNIVERSITY) 15 March 2022 (2022-03-15) entire document | 1-13 |
| A | CN 114391042 A (CELL MICROSYSTEMS, INC. et al.) 22 April 2022 (2022-04-22) entire document | 1-13 |
| A | CN 115116549 A (TENCENT TECHNOLOGY (SHENZHEN) CO., LTD.) 27 September 2022 (2022-09-27) entire document | 1-13 |
| A | CN 115198003 A (HUAZHONG AGRICULTURAL UNIVERSITY et al.) 18 October 2022 (2022-10-18) entire document | 1-13 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 June 2023** | **15 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/143924**

| Patent document cited in search report | | | Publication date (day/month/year) | Patent family member(s) | | | Publication date (day/month/year) |
|---|---|---|---|---|---|---|---|
| US | 2022068438 | A1 | 03 March 2022 | None | | | |
| US | 2022148282 | A1 | 12 May 2022 | WO | 2021009906 | A1 | 21 January 2021 |
| | | | | CN | 114127307 | A | 01 March 2022 |
| CN | 114187239 | A | 15 March 2022 | None | | | |
| CN | 114391042 | A | 22 April 2022 | EP | 3990658 | A1 | 04 May 2022 |
| | | | | JP | 2022538359 | A | 01 September 2022 |
| | | | | WO | 2020264387 | A1 | 30 December 2020 |
| | | | | CA | 3145243 | A1 | 30 December 2020 |
| CN | 115116549 | A | 27 September 2022 | None | | | |
| CN | 115198003 | A | 18 October 2022 | None | | | |

Form PCT/ISA/210 (patent family annex) (July 2022)